# EUROPÄISCHE PATENTSCHRIFT

(11) **EP 2 027 406 B1**
(45) Veröffentlichungstag und Bekanntmachung des Hinweises auf die Patenterteilung: **26.10.2011**
(21) Anmeldenummer: 07722524.1
(22) Anmeldetag: 13.06.2007
(51) Int. Cl.: F16K 31/528, F16K 31/524, F16K 37/00

(54) **VENTIL**
VALVE
SOUPAPE

(30) Priorität: 14.06.2006 DE 102006027951
(43) Veröffentlichungstag der Anmeldung: 25.02.2009
(73) Patentinhaber: Westphal, Friedrich, 79361 Sasbach (DE)
(72) Erfinder: Westphal, Friedrich, 79361 Sasbach (DE)
(74) Vertreter: Geitz Truckenmüller Lucht
(86) Internationale Anmeldenummer: PCT/DE2007/001061
(87) Internationale Veröffentlichungsnummer: WO 2007/143984

(56) Entgegenhaltungen:
- EP-A- 1 160 493
- US-A- 1 589 696
- US-A- 1 879 320
- US-A1- 2004 128 033
- US-B1- 6 644 353

## Beschreibung

Die vorliegende Erfindung betrifft ein Ventil mit einem Ventilgehäuse, mit einem Ventilsitz in dem Ventilgehäuse und einem in axialer Richtung im Ventilgehäuses verschiebbaren Schließkörper, welcher beim Schließen des Ventils an den Ventilsitz angedrückt wird und beim Öffnen des Ventils von dem Ventilsitz entfernt wird.

Das Ventil wird von einem Fluid oder Medium durchströmt. Dieses kann flüssig oder gasförmig sein.

Aus dem Stand der Technik sind Ventile bekannt, die als schaltende Magnetventile durch eine Feder stromlos geschlossen werden. Über einen Spulenstrom wird ein Gleichgewicht von Feder- zu Magnetkraft hergestellt. Die Höhe des Spulenstroms beziehungsweise der Magnetkraft bestimmt den Grad der Ventilöffnung. Diese ist in der Regel proportional zum Strom.

Ein Nachteil dieser federbeaufschlagten Magnetventile besteht darin, dass die beim Öffnen und Schließen des Ventils wirkende Kraft unterschiedlich ist. Dies führt dazu, dass die beiden Vorgänge nicht gleich schnell erfolgen. Darüber hinaus erweist sich als nachteilig, dass die bekannten Ventile eine relativ lange Ansprechzeit besitzen. Derartige Ventile sind bei bestimmten Anwendungen, beispielsweise in der Wasser- und der Gasinjektionstechnik zum Spritzgießen von Kunststoffhohlkörpern zu langsam.

Darüber hinaus sind aus dem Stand der Technik Ventile bekannt, bei denen die Rotationsbewegung eines manuellen Antriebs oder eines Motors in eine Translationsbewegung eines Schließkörpers mittels eines Gewindes übertragen wird. Derartige Ventile dienen üblicherweise zum Absperren von Rohrleitungen, welche Wasser oder andere Flüssigkeiten führen. Bei derartigen Ventilen ist es unerheblich, wie lange der Vorgang des Öffnens und Schließens des Ventils dauert. Diese Ventile haben den Nachteil, dass die Ansprechzeit sowie die Zeit zum Öffnen und Schließen des Ventils für Anwendungen, in denen das durch das Ventil in der Öffnungsstellung hindurchgeströmte Volumen möglichst exakt kontrolliert werden muss, zu lange ist.

Das Dokument US 1897320 zeigt ein Ventil gemäß dem Oberbegriff von Anspruch 1.

Dem erfindungsgemäßen Ventil liegt damit die Aufgabe zugrunde, die Ansprechzeit sowie die Zeit zum Öffnen und Schließen des Ventils gegenüber bekannten Ventil zu verkürzen, bei dem eine an den Schließkörper angeordnete Ventilhülse mit einer Verdrehsicherung ausgestattet ist, die nicht eine Kulisse an der Ventilhülse ausschließt, und die nicht zu einer Schwächung der Ventilhülse führt.

### Die Erfindung und ihre Vorteile

Gegenüber den bekannten Ventilen hat das erfindungsgemäße Ventil den Vorteil, dass es eine sehr kurze Ansprechzeit aufweist und das Öffnen und Schließen gleich schnell und innerhalb eines kurzen Zeitraums erfolgt. Das erfindungsgemäße Ventil weist einen Schließkörper mit einer Ventilhülse auf. Die Ventilhülse und der Schließkörper können aus einem Stück bestehen oder aus zwei Stücken, die fest miteinander verbunden sind. Die Ventilhülse weist eine Kulisse in Form einer Nut oder eines Schlitzes auf. In der Ventilhülse ist ein Übertragungsteil drehbar geführt. Zum Öffnen und Schließen des Ventils wird die Kraft eines Rotationsantriebs genutzt. Dieser ist fest mit dem Übertragungsteil verbunden. Dadurch wird die Rotationsbewegung des Rotationsantriebs auf das Übertragungsteil übertragen. Das Übertragungsteil ist mit einem Mitnehmer ausgestattet, der als Kulissenstift oder Kulissenstein ausgestaltet ist. Kulissenstift oder Kulissenstein sind bevorzugt an der Außenseite des Übertragungsteils angeordnet. Der Mitnehmer ist in der Kulisse der Ventilhülse beidseitig zwangsgeführt. Beidseitig bedeutet, dass der Mitnehmer entlang beider Begrenzungen der als Schlitz oder Nut ausgebildeten Kulisse geführt wird. Die Rotationsbewegung des an dem Übertragungsteil angeordneten Mitnehmers führt dazu, dass der Mitnehmer in der Kulisse bewegt wird. Da eine Rotationsbewegung der Ventilhülse in dem Ventilgehäuse durch eine Verdrehsicherung ausgeschlossen ist, wird die Ventilhülse durch die Rotationsbewegung des Mitnehmers und durch den Verlauf der Kulisse zu einer Translationsbewegung gezwungen. Diese ist möglich, da die Ventilhülse mit dem Schließkörper in dem Ventilgehäuse axial verschiebbar geführt ist. Auf diese Weise wird die Rotationsbewegung in eine Translationsbewgung umgesetzt. Der Hub der Translationsbewegung entspricht der Länge der Strecke, die der Mitnehmer und damit die Ventilhülse in axialer Richtung zurücklegen. Dieser ist vorgegeben durch die Ausdehnung der Kulisse in axialer Richtung einerseits und durch den Winkel, um den der Rotationsantrieb den Mitnehmer dreht andererseits. Der zurückgelegte Weg ist sehr kurz, so dass die Bewegung sehr schnell erfolgen kann. Der Weg ist identisch für das Öffnen und Schließen des Ventils. Der Unterschied zwischen den Öffnungs- und Schließbewegung besteht in der Rotationsrichtung des Rotationsantriebs. Da die Rotationsbewegung in beide Richtungen identisch ist, erfolgt das Öffnen und Schließen des Ventils mit derselben Kraft und gleich schnell.

Nach einer vorteilhaften Ausgestaltung der Erfindung sind die Ventilhülse und das Übertragungsteil an den einander zugewandten Abschnitten frei von einem Gewinde ausgebildet. Die Übertragung der Rotationsbewegung des Übertragungsteils in eine lineare Bewegung oder Translationsbewegung der Ventilhülse erfolgt ausschließlich durch die Kulisse, den Mitnehmer und die Verdrehsicherung und damit unter Ausschluss eines Gewindes. Dies ist entscheidend, da ein Gewinde die Bewegung beim Öffnen und Schließen des Ventils verzögert.

Nach einer weiteren vorteilhaften Ausgestaltung der Erfindung weist der Verlauf der Kulisse die Form einer Helix auf. Eine Helix ist eine Kurve, die sich mit konstanter Steigung um den Mantel eines Zylinders legt. Sie wird auch als Wendel oder zylindrische Spirale bezeichnet. Der Verlauf einer Helix entspricht der Überlagerung einer Rotations- und Translationsbewegung mit konstanter Geschwindigkeit. Sie ist damit an die Umwandlung einer Rotations- in eine Translationsbewegung optimal angepasst. Die Kraftübertragung von dem Mitnehmer auf die Kulisse ist bei einem Helix-förmigen Verlauf wesentlich günstiger als bei einem geradlinigen Verlauf der Kulisse in axialer Richtung, da aufgrund der Neigung der Kulisse der Mitnehmer eine Kraft mit einer Kraftkomponente in axialer Richtung auf die Kulisse ausübt. Diese Kraftkomponente ist umso größer, je kleiner die Steigung und damit die Ganghöhe der Helix ist. Um jedoch das Öffnen und Schließen des Schließkörpers in möglichst kurzer Zeit zu ermöglichen, dürfen Steigung und Ganghöhe nicht zu klein sein.

Nach einer weiteren vorteilhaften Ausgestaltung der Erfindung legt sich die Helix um einen Winkel um die Ventilhülse, der kleiner ist als 360°. Besonders bevorzugt ist der Winkel kleiner als 270°. Die Kulisse vollzieht damit keine volle Umdrehung um die Ventilhülse. Dadurch wird der Weg und damit die Zeit verkürzt, die für das Öffnen und Schließen des Ventils notwendig sind.

Nach einer weiteren vorteilhaften Ausgestaltung der Erfindung weist die Ventilhülse zwei Kulissen auf. Das Übertragungsteil ist mit zwei in den Kulissen beidseitig zwangsgeführten Mitnehmern ausgestattet. Der Verlauf beider Kulissen hat die Form einer Helix, deren Winkel jeweils kleiner ist als 180°. Durch die beiden Kulissen und die beiden Mitnehmer wird eine stabile Führung des Übertragungsteils in der Ventilhülse garantiert. Die beiden Kulissen haben vorteilhafterweise in axialer Richtung dieselbe Ausdehnung.

Es können auch mehr als zwei Kulissen und mehr als zwei Mitnehmer vorgesehen sein. Die Anzahl der Kulissen und Mitnehmer stimmt jeweils überein.

Nach einer weiteren vorteilhaften Ausgestaltung der Erfindung weist die Ventilhülse im Inneren einen Hohlraum mit einem kreisrunden Querschnitt auf. Das Übertragungsteil weist bevorzugt ebenfalls eine zylindrische Form und einen kreisrunden Querschnitt auf. Der Außendurchmesser des Übertragungsteils und der Durchmesser des Hohlraums sind so aneinander angepasst, dass das Übertragungsteil mit geringem Spiel in der Ventilhülse geführt ist.

Die Verdrehsicherung weist am oberen Ende der Ventilhülse einen überstehenden Rand auf, der an mindestens einer Seite abgeflacht ist und passgenau in eine Aussparung im Ventilgehäuse eingreift. Die Länge der Aussparung in axialer Richtung stimmt dabei mit der Summe aus der Höhe des Randes und dem Hub des Schließkörpers beim Öffnen und Schließen des Ventils überein oder ist geringfügig größer. Dadurch wird gewährleistet, dass die Verdrehsicherung über den gesamten Hub wirksam ist.

Bei einer alternativen Ausgestaltung der Verdrehsicherung ist die Außenwand der Ventilhülse zumindest abschnittsweise eckig ausgebildet. Das Ventilgehäuse weist eine entsprechende eckige Ausnehmung für die Ventilhülse auf, so dass die Ventilhülse passgenau in das Ventilgehäuse eingreift. Auch in diesem Fall ist die Länge der eckigen Ausnehmung in dem Ventilgehäuse in axialer Richtung an die Summe aus der Länge des eckigen Abschnitts der Ventilhülse und dem Hub des Schließkörpers angepasst, um die Verdrehsicherung über den gesamten Hub zu gewährleisten.

Nach einer weiteren vorteilhaften Ausgestaltung der Erfindung ist ein Getriebe vorgesehen zur Übersetzung der Antriebsdrehzahl des Rotationsantriebs in eine Rotationsbewegung des Übertragungsteils um einen durch die Ausnehmung in der Ventilhülse vorgegebenen Winkel. Dabei wird eine hohe Drehzahl des Rotationsantriebs durch das Getriebe in eine entsprechend geringe Drehzahl übersetzt. Da der durch die Kulisse vorgegebene Weg klein ist, bedarf es vorteilhafterweise zum Öffnen und Schließen des Ventils nur einer Rotation um einen kleinen Winkel von weniger als 360°.

Nach einer weiteren vorteilhaften Ausgestaltung der Erfindung ist als Rotationsantrieb für das Ventil ein Elektromotor vorgesehen, der sehr schnell auf eine Änderung der Stromrichtung im Leiter mit einer Änderung der Kraftrichtung und damit der Bewegungsrichtung der Motorrotation reagiert. Die Bewegung der Schließkörpers erfolgt damit in beide Richtungen mit der gleichen Beschleunigung. Dies gilt auch für den Beginn und das Ende einer Bewegung.

Nach einer weiteren vorteilhaften Ausgestaltung der Erfindung ist an dem Ventil mindestens ein Drucksensor vorgesehen. Je ein Drucksensor kann beispielsweise am Einlass und am Auslass für das strömende Fluid angeordnet sein. Der am Ventil herrschende Druck kann mit einem vorgegebenen Sollwert verglichen werden. Weicht der Druck am Auslass der Ventils von einem vorgegebenen Sollwert ab, so wird die Einstellung des Schließkörpers entsprechend geändert. Weicht der Druck am Einlass des Ventils von einem Sollwert ab, so wird der durch eine Fluidfördereinrichtung vorgegebene Druck entsprechend geändert. Weicht der Druck trotz entsprechend eingestellter Fluidförderung am Einlass vom Sollwert ab, so ist der erforderliche Prozessdruck nicht mehr vorhanden. Die Ursache hierfür können beispielsweise ein Defekt der Fluidfördereinrichtung, eine Leckage an der Leitung oder eine zu geringe Fluidmenge in einem Fluidreservoir sein. Ein entsprechender Hinweis wird dem Benutzer angezeigt, damit dieser den Fehler beheben kann. Die Vorrichtung kann in diesem Fall automatisch abgeschaltet werden.

Nach einer weiteren vorteilhaften Ausgestaltung der Erfindung ist eine Steuereinrichtung vorgesehen. Zur Übertragung der Daten des Drucksensors ist eine Schnittstelle vorgesehen. Besonders bevorzugt sind hierzu Sender und Empfänger an dem Drucksensor und der Steuereinrichtung angeordnet um die Daten drahtlos zu übertragen.

Nach einer weiteren vorteilhaften Ausgestaltung der Erfindung ist das Ventil auf einen Sockel montiert, mit einem Einlass in den Sockel und einem Auslass aus dem Sockel für das strömende Medium. Hierbei erweist sich die höhere Stabilität eines entsprechenden Sockels gegenüber einfachen Leitungen als vorteilhaft. Darüber hinaus können weitere Elemente, wie zusätzliche Gaskanäle, Drucksensoren bzw. Druckgeber und Druckaufnehmer in dem Sockel untergebracht werden. In einen Einlass des Sockels eingeleitetes Fluid gelangt über den Einlass im Ventil in dieses hinein und wird durch das Ventil geschleust. Über einen Auslass im Ventil wird das strömende Fluid zur weiteren Verwendung über Kanäle im Sockel weitergeleitet. Das Ventil kann zudem über mehrere Kanäle mit Kanälen im Sockel verbunden sein.

Die Erfindung betrifft darüber hinaus eine Vorrichtung zur Druckregulierung, bei der mindestens zwei Ventile auf einem Sockel mit einer Gasführung montiert sind. Um in einem System während eines Arbeitsvorganges einen konstanten Druck aufzubauen und aufrecht zu erhalten, werden zwei der oben geschriebenen Ventile hintereinander geschaltet. Ein Ventil dient dem Druckaufbau, indem es die gewünschte Gasmenge mit einem vorgegebenen Mindestdruck führt. Das andere Ventil dient dem Druckabbau. Der Druckabbau erfolgt dadurch, dass bei Überschreiten eines vorgegebenen Maximaldrucks Gas über das zweite Ventil abgelassen wird. Somit wird der Druck bei einem bestimmten Wert in der Anlage stabilisiert, unabhängig davon, welchen Schwankungen der Eingangsdruck unterworfen ist.

Nach einer weiteren vorteilhaften Ausgestaltung der Erfindung werden mehrere Ventile auf einem Sockel installiert. Diese verteilen, ausgehend von einem einzelnen Versorgungsdruck, den Druck auf unterschiedliche Komponenten.

Darüber hinaus ergeben sich weitere Anwendungsbereiche durch die Kombination von Ventilen mit zusätzlichen Elementen, die auf dem Sockel angebracht werden. Druckgeber bzw. Drucksensoren zur Messung von Gas- und Flüssigkeitsdrücken werden zwischen den beiden Ventilen angeordnet um einen Istwert mit einem Sollwert abzustimmen. Über zusätzliche Drucksensoren wie Druckaufnehmer wird die Strömungsgeschwindigkeit des Fluids ermittelt. Dadurch wird beispielsweise eine druckabhängige Volumenstromregelung ermöglicht.

Die Erfindung betrifft darüber hinaus ein Verfahren zur Steuerung eines oder mehrerer Ventile, welche von einem Fluid durchströmt werden. In einer ersten Variante des Verfahrens wird bei mehreren miteinander verbundenen Ventilen der Sollwert für den Druck eines jeden Ventils vorgegeben. Eine Fluidfördereinrichtung fördert dabei das Fluid durch die Ventile und gegebenenfalls durch weitere an das System angeschlossene Einheiten. Bei der Fluidfördereinrichtung kann es sich beispielsweise um einen Verdichter oder einen Gasbehälter handeln. Die Sollwerte für den Druck an den verschiedenen Ventilen hängen von dem Prozess ab, der durch die Ventile gesteuert werden soll. Sie werden daher in Abhängigkeit von dem Prozess vorgegeben. Die Fluidfördereinrichtung muss das Fluid mit einem Druck fördern, der ausreicht, um die für die einzelnen Ventile vorgegebenen Drucksollwerte zu erreichen. Unter Berücksichtigung eines üblicherweise im System stattfindenden Druckverlustes genügt es nicht, wenn die Fluidfördereinrichtung das Fluid mit einem Druck fördert, der mit dem höchsten Sollwert aller Ventile übereinstimmt. Es wird daher ein zusätzlicher Wert für den Druck zu dem höchsten Sollwert addiert und die Fluidfördereinrichtung mit der Summe aus diesen beiden Drücken betrieben. Der zu dem höchsten Sollwert hinzu addierte Druck kann entweder ein geeigneter Erfahrungswert sein oder ein Wert, der aus den Istwerten und Sollwerten für den Druck an den Ventilen bestimmt wird. Auf diese Weise ist es möglich, die Fluidfördereinrichtung stets mit dem für den anstehenden Prozess notwendigen Druck zu betreiben. Der Druck wird überwacht und jeweils an die bestehenden Anforderungen angepasst.

Das Drehmoment, mit dem der Rotationsantrieb das Ventil beim Öffnen und Schließen antreibt, wird über einen Drehmoment-Sensor bestimmt. Liegt das Drehmoment außerhalb eines vorgegebenen Bereichs, so wird eine Verunreinigung oder Verschmutzung des Ventils festgestellt. Um die Verunreinigung zu beseitigen, wird das Ventil mehrfach geöffnet und geschlossen, so dass sich die Verunreinigungen unter Einwirkung des mit Druck strömenden Fluids lösen können. Handelt es sich bei dem Fluid um ein Gas, so werden die Verunreinigungen aus dem Ventil ausgeblasen.

Nach einer weiteren vorteilhaften Ausgestaltung der Erfindung erfolgt das Öffnen und Schließen des Ventils zeitlich gesteuert innerhalb eines vorgegebenen Zeitraums. Wird der Druck über der Zeit in einem Diagramm aufgetragen, so folgt der Druck sowohl beim Druckaufbau als auch beim Druckabbau einer Rampe. Ist das Ventil mit einem Drucksensor ausgestattet, so kann zu jedem beliebigen Zeitpunkt während des Druckaufbaus und Druckabbaus der Istwert mit dem Sollwert des Drucks verglichen werden. Übersteigt der Istwert des Drucks den Sollwert, wird eine Umgehungsleitung beziehungsweise ein Bypass geöffnet, wodurch ein Anteil des Fluids abgezweigt und abgeleitet wird. Eine entsprechende Abweichung kann außerdem bedeuten, dass der Strömungsquerschnitt zumindest in einem Bereich des Ventils oder der an das Ventil angeschlossenen Leitungen oder Bauteile aufgrund von Verunreinigungen verengt ist. Wird daher eine Abweichung angezeigt, kann gegebenenfalls eine Aufforderungen an den Benutzer ergehen, die Reinigung des Systems zu veranlassen. An den Bypass kann zusätzlich dazu ein weiteres Ventil angeordnet sein.

Nach einer weiteren vorteilhaften Ausgestaltung der Erfindung wird ermittelt, ob der Schließkörper eines Ventils in Schließstellung derart am Ventilsitz anliegt, dass es zu keiner Leckage kommt. Wird aufgrund von Verschleiß eine Leckage festgestellt, so wird der Weg, den der Schließkörper zum Öffnen und Schließen des Ventils zurücklegt, nachjustiert. Erst wenn eine entsprechende Nachjustierung nicht mehr möglich ist, müssen der Schließkörper und/ oder der Ventilsitz ausgetauscht werden. Auf diese Weise kann der Zeitraum bis zum durch Verschleiß bedingten notwendigen Austausch von Schließkörper und/oder Ventilsitz verlängert werden.

Nach einer weiteren vorteilhaften Ausgestaltung des erfindungsgemäßen Verfahrens erfolgt der Druckaufbau und Druckabbau über der Zeit als sanft ansteigende oder abfallende Flanke. Auf diese Weise kann beim Umschalten des Druckes das Ausbilden von Blasen, sogenannte Vakuolen, vermieden werden. In diesem Fall stimmt der Istwert des Druckes besser mit einem vorgegebenen Sollwert überein. Dies führt wiederum zu reproduzierbaren Prozessen und zur Verbesserung der Qualität des Prozesses und der damit gegebenenfalls hergestellten Produkte.

Das erfindungsgemäße Verfahren zur Steuerung eines oder mehreren Ventil kann auch bei bekannten Proportionalventilen oder sonstigen Ventilen eingesetzt und angewandt werden.

Weitere Vorteile und vorteilhafte Ausgestaltungen der Erfindung können der nachfolgenden Beschreibung, der Zeichnung und den Ansprüchen entnommen werden.

### Zeichnung

In der Zeichnung sind Ausführungsbeispiele eines erfindungsgemäßen Ventils dargestellt. Es zeigen:
- Figur 1: Perspektivische Darstellung eines Ventils auf einem Sockel,
- Figur 2: Übertragungsteil und Schließkörper im Längsschnitt gemäß Figur 1,
- Figur 3: Ventil im zusammengebauten Zustand mit Sockel im Längsschnitt gemäß Figur 1,
- Figur 4: Vorrichtung zur Druckregulierung mit zwei Ventilen auf einem Sockel und den Motoren zum Antrieb der Ventile.

### Beschreibung der Ausführungsbeispiele

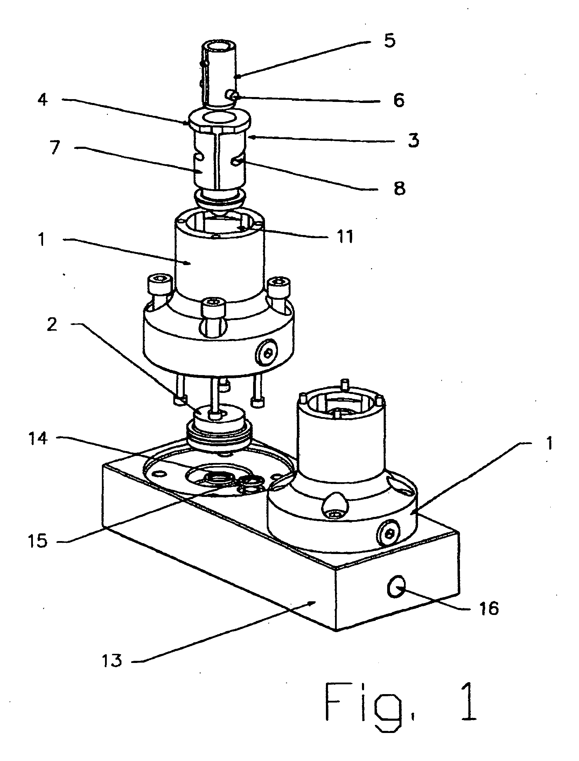

In der Figur 1 ist ein Ventil mit einem Ventilgehäuse 1, mit einem Ventilsitz 2 in dem Ventilgehäuse 1, einem Schließkörper 3, einer Verdrehsicherung 4 und einem Übertragungsteil 5 dargestellt. Das Übertragungsteil 5 weist eine zylindrische Form und einen kreisrunden Querschnitt auf. An der Außenseite des Übertragungsteils 5 ragt senkrecht zur Mittelachse des Übertragungsteils 5 ein Kulissenstift 6 radial nach außen. Er verläuft senkrecht zur Mittelachse und damit zur Bewegungsrichtung des Schließkörpers. Im zusammengebauten Ventil wird das Übertragungsteil 5 in einer Ventilhülse 7 drehbar geführt, die sich an den Schließkörper 3 anschließt. Der Kulissenstift 6 greift dabei in eine Kulisse 8 ein, die sich in der Ventilhülse 7 befindet. Die Kulisse 8 ist als Schlitz ausgebildet und hat einen Helix-förmigen Verlauf. Der Kulissenstift 6 am Übertragungsteil 5 und die Kulisse 8 in der Ventilhülse 7 bilden gemeinsam eine Einrichtung zur Übertragung der Kraft eines Antriebs auf den Schließkörper 3.

Das Übertragungsteil 5 führt dabei eine Rotationsbewegung durch. Die Verdrehsicherung 4, die sich am oberen Ende der Ventilhülse 7 befindet, greift in eine Aussparung 11 im Ventilgehäuse ein und verhindert eine Rotation des Schließkörpers 3, so dass dieser nur eine Translationsbewegung entlang der Achse des Ventilgehäuses 1 durchführen kann. Beim Schließen des Ventils wird der Schließkörper 3 an den Ventilsitz 2 angedrückt und beim Öffnen von dem Ventilsitz 2 angehoben.

Das Ventil ist auf einem Sockel 13 montiert. Ein in der Zeichnung nicht erkennbares strömendes Fluid gelangt über einen Einlass 14 aus dem Sockel in das Ventil und über einen Auslass 15 aus dem Ventil in den Sockel. Zur Druckregulierung ist ein weiteres Ventil auf dem Sockel angebracht. Beide Ventile werden hierbei durch eine gemeinsame Gasführung 16 im Sockel 13 verbunden. Von dem zweiten Ventil ist in der Figur 1 lediglich das Ventilgehäuse 1 dargestellt.

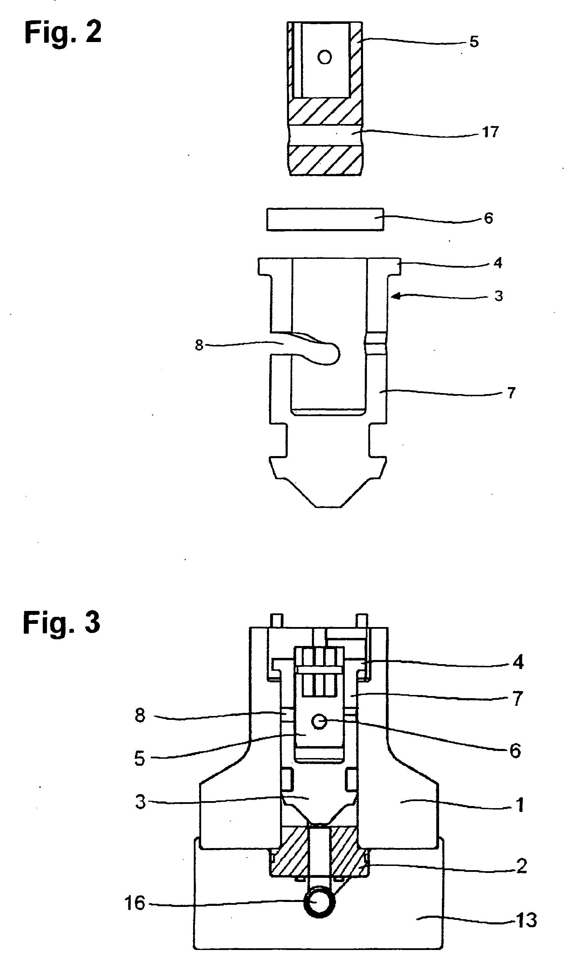

Die Figur 2 zeigt das Übertragungsteil 5 mit einer Bohrung 17, in der der Kulissenstift 6 am Übertragungsteil 5 befestigt wird. Das Übertragungsteil 5 mit dem Kulissenstift 6 wird in der Ventilhülse 7 des Schließkörpers 3 geführt, wobei der Kulissenstift 6 in die Kulisse 8 der Ventilhülse 7 eingreift.

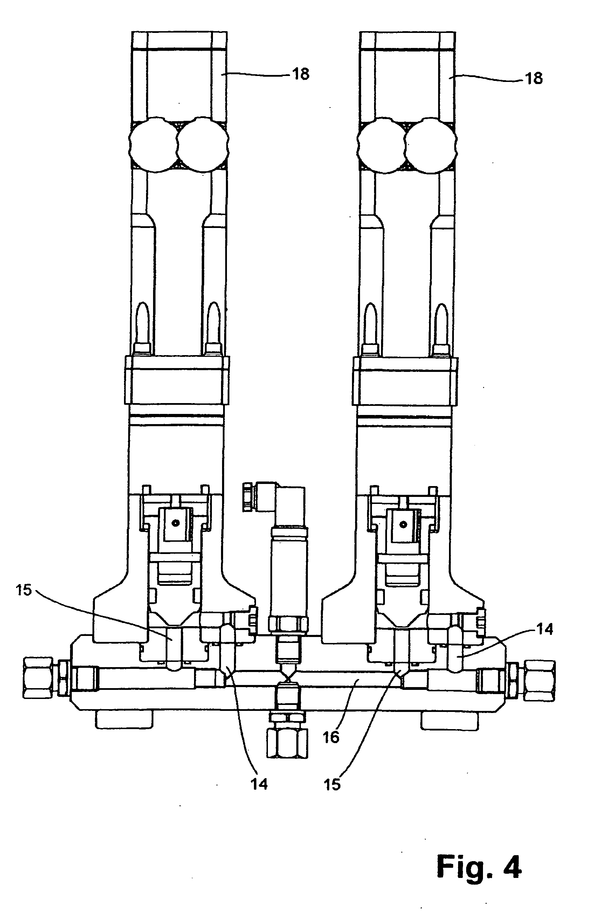

In den Figuren 3 und 4 ist das Ventil im zusammengefügten Zustand mit Sockel gemäß Figur 1 dargestellt. Ferner zeigen die beiden Figuren eine Vorrichtung zur Druckregulierung mit zwei Ventilen auf einem Sockel. In Figur 4 sind zusätzlich die Motoren 18 zum Antrieb der Ventile dargestellt.

### Bezugszeichen

- 1: Ventilgehäuse
- 2: Ventilsitz
- 3: Schließkörper
- 4: Verdrehsicherung
- 5: Übertragungsteil
- 6: Kulissenstift
- 7: Ventilhülse
- 8: Kulisse
- 9:
- 10:
- 11: Aussparung im Ventilgehäuse
- 12:
- 13: Sockel
- 14: Einlass aus dem Sockel
- 15: Auslass in den Sockel
- 16: Gasführung
- 17: Bohrung für Kulissenstift
- 18: Motor

## Patentansprüche

1. Ventil
mit einem Ventilgehäuse (1)
mit einem Ventilsitz (2) in dem Ventilgehäuse (1)
mit einem in axialer Richtung im Ventilgehäuse (1) verschiebbaren Schließkörper (3), welcher beim Schließen des Ventils an den Ventilsitz (2) angedrückt wird und beim Öffnen des Ventils von dem Ventilsitz (2) entfernt wird,
mit einer fest mit dem Schließkörper (3) verbundenen oder einstückig mit dem Schließkörper (3) ausgebildeten Ventilhülse (7),
mit einer Verdrehsicherung (4) an der Ventilhülse (3) und/ oder an dem Ventilgehäuse (1) um eine Rotation der Ventilhülse und des Schließkörpers (3) in dem Ventilgehäuse (1) zu verhindern,
mit einer Kulisse (8) an der Ventilhülse (7),
mit einem in oder an der Ventilhülse (3) drehbar geführten und mit einem Rotationsantrieb verbindbaren Übertagungsteil (5),
**dadurch gekennzeichnet,**
**dass** das Übertragungsteil mit mindestens einem als Kulissenstift (6) oder Kulissenstein ausgebildeten, in der Kulisse (8) beidseitig zwangsgeführten Mitnehmer ausgestattet ist zur Übertragung der Rotationsbewegung des Rotationsantriebs in eine Translationsbewegung des Schließkörpers (3) in axialer Richtung,
**dass** die Verdrehsicherung am oberen Ende der Ventilhülse einen überstehenden Rand aufweist, der an mindestens einer Seite abgeflacht ist und passgenau in eine Aussparung im Ventilgehäuse eingreift, oder dass die Außenwand der Ventilhülse (7) zumindest abschnittsweise eckig ausgebildet ist und das Ventilgehäuse (1) für die Ventilhülse (7) eine entsprechende eckige Ausnehmung aufweist, wobei die Ventilhülse passgenau in das Ventilgehäuse eingreift.

2. Ventil nach Anspruch 1, **dadurch gekennzeichnet, dass** die Ventilhülse und das Übertragungsteil an den einander zugewandten Abschnitten frei von einem Gewinde ausgebildet sind.

3. Ventil nach Anspruch 1 oder 2, **dadurch gekennzeichnet, dass** der Verlauf der Kulisse (8) die Form einer Helix aufweist.

4. Ventil nach einem der vorhergehenden Ansprüche, **dadurch gekennzeichnet, dass** die Ventilhülse zwei Kulissen (8) aufweist, dass das Übertragungsteil (5) zwei in den Kulissen beidseitig zwangsgeführte Mitnehmer (6) aufweist, und dass der Verlauf beider Kulissen (8) die Form einer Helix aufweist, deren Winkel jeweils kleiner ist als 180°.

5. Ventil nach einem der vorhergehenden Ansprüche, **dadurch gekennzeichnet, dass** ein Getriebe vorgesehen ist zur Übersetzung der Antriebsdrehzahl des Rotationsantriebs in eine Rotationsbewegung des Übertragungsteils (5) um einen durch die Ventilhülse vorgegebenen Winkel.

6. Ventil nach einem der vorhergehenden Ansprüche, **dadurch gekennzeichnet, dass** mindestens ein Drucksensor an dem Ventilgehäuse angeordnet ist.

7. Ventil nach einem der vorhergehenden Ansprüche, **dadurch gekennzeichnet, dass** an dem Übertragungsteil oder an dem Rotationsantrieb ein Drehmomentsensor angeordnet ist.

8. Ventil nach einem der vorhergehenden Ansprüche, **dadurch gekennzeichnet, dass** das Ventil auf einem Sockel (13) montiert ist, mit einem Einlass (15) in den Sockel und einem Auslass (14) aus dem Sockel für das strömende Fluid.

9. Ventil nach Anspruch 8, **dadurch gekennzeichnet, dass** an dem Einlass und an dem Auslass Drucksensoren angeordnet sind.

10. Ventil nach einem der vorhergehenden Ansprüche, **dadurch gekennzeichnet, dass** zur Steuerung des Ventils eine Steuereinrichtung vorgesehen ist.

11. Ventil nach Anspruch 6 und 10, **dadurch gekennzeichnet, dass** die Drucksensoren über eine Schnittstelle mit der Steuereinrichtung verbunden sind.

12. Ventil nach Anspruch 11, **dadurch gekennzeichnet, dass** die Drucksensoren und die Steuereinrichtung mit je einem Sender und einem Empfänger ausgestattet sind zur drahtlosen Datenübertragung.

13. Vorrichtung zur Druckregulierung, **dadurch gekennzeichnet, dass** mindestens zwei Ventile nach einem der Ansprüche 1 bis 12 auf einem Sockel (13) mit einer Gasführung (16) montiert sind.

14. Verfahren zur Steuerung mehrerer miteinander verbundener, von einem Fluid durchströmter Ventile nach einem der Ansprüche 1 bis 12, wobei das Fluid durch eine Fluidfördereinrichtung gefördert wird, **dadurch gekennzeichnet, dass** für jedes Ventil ein Sollwert für den Druck vorgegeben wird, dass zu dem höchsten Sollwert ein vorgegebener Druck addiert wird, und dass die Summe als Sollwert für den Druck der Fluidfördereinrichtung eingestellt wird, und wobei das Drehmoment an dem Übertragungsteil des Ventils erfasst wird, und dass bei Überschreiten eines vorgegebenen Sollwertes des Drehmoments das Ventil mithilfe des Fluids gereinigt wird.

## Claims

1. Valve
with a valve body (1),
with a valve seat (2) in the valve body (1),
with a closing body (3) displaceable in the axial direction in the valve body (1), that is pressed against the valve seat (2) when the valve is closed and is lifted from the valve seat (2) when the valve is opened,
with a valve sleeve (7) permanently connected to the closing body (3) or embodied in one piece with the closing body (3),
with an anti-rotation element (4) on the valve sleeve (3) and/or on the valve body (1) to prevent a rotation of the valve sleeve and the closing body (3) in the valve body (1),
with a baffle (8) on the valve sleeve (7),
with a transfer part (5) that is rotationally guided in or on the valve sleeve (3) and that can be connected to a rotary drive,
**characterised in that**
the transfer part is equipped with at least one driver embodied as a baffle pin (6) or sliding block and positively driven in the baffle (8) on both sides to transfer the rotary motion of the rotary drive into a translational motion of the closing body (3) in an axial direction,
the anti-rotation element has at the upper end of the valve sleeve a projecting edge that is flattened on at least one side and engages precisely in a recess in the valve body, or that the outer wall of the valve sleeve (7) is angular at least in sections and the valve body (1) for the valve sleeve (7) has a corresponding angular void, whereby the valve sleeve engages precisely in the valve body.

2. Valve according to claim 1, **characterised in that** the valve sleeve and the transfer part are formed without a thread in the sections facing each other.

3. Valve according to claim 1 or 2, **characterised in that** the form of the baffle (8) is that of a helix.

4. Valve according to one of the previous claims, **characterised in that** the valve sleeve has two baffles (8), that the transfer part (5) has two drivers (6) positively driven in the baffles on both sides and that the form of both baffles (8) is that of a helix whose angle is respectively less than 180°.

5. Valve according to one of the previous claims, **characterised in that** a gear unit is provided to translate the drive speed of the rotary drive into a rotary motion of the transfer part (5) around an angle prescribed by the valve sleeve.

6. Valve according to one of the previous claims, **characterised in that** at least one pressure sensor is arranged on the valve body.

7. Valve according to one of the previous claims, **characterised in that** a torque sensor is arranged on the transfer part or on the rotary drive.

8. Valve according to one of the previous claims, **characterised in that** the valve is mounted on a base (13) with an inlet (15) into the base and an outlet (14) from the base for the flowing fluid.

9. Valve according to claim 8, **characterised in that** pressure sensors are arranged on the inlet and on the outlet.

10. Valve according to one of the previous claims, **characterised in that** a control unit is provided to control the valve.

11. Valve according to claims 6 and 10, **characterised in that** the pressure sensors are connected to the control unit by means of an interface.

12. Valve according to claim 11, **characterised in that** the pressure sensors and the control unit are each equipped with a transmitter and a receiver for wireless data transmission.

13. Device for pressure regulation, **characterised in that** at least two valves according to one of claims 1 to 12 are mounted on a base (13) with a gas conduit (16).

14. Method for controlling several interconnected valves according to one of claims 1 to 12 through which a fluid is flowing, whereby the fluid is pumped by a fluid pumping unit, **characterised in that** for each valve a nominal value for the pressure is prescribed, that at the highest nominal value a prescribed pressure is added, and that the total is set as a nominal value for the pressure of the fluid pumping unit, and whereby the torque at the transfer part of the valve is recorded, and that the valve is cleaned by means of the fluid if a prescribed nominal torque value is exceeded.

## Revendications

1. Soupape
dotée d'un corps de soupape (1),
d'un siège de soupape (2) dans le corps de soupape (1),
d'un élément de fermeture (3) se déplaçant dans le sens axial dans le corps de soupape (1), cet élément de fermeture étant pressé contre le siège de soupape (2) lors de la fermeture de la soupape, et écarté du siège de soupape (2) lors de l'ouverture de la soupape,
d'une douille de soupape (7) reliée solidairement à l'élément de fermeture (3) ou faite d'une seule pièce avec l'élément de fermeture (3),
d'une sécurité anti-rotation (4) au niveau de la douille de soupape (3) et/ou au niveau du corps de soupape (1) servant à empêcher la rotation de la douille de soupape et de l'élément de fermeture (3) dans le corps de soupape (1),
d'une coulisse (8) au niveau de la douille de soupape (7),
d'un élément de transmission (5) rotatif dans ou au niveau de la douille de soupape (3) et pouvant être relié à un actionneur rotatif,
**caractérisée en ce que**
l'élément de transmission est équipé d'au moins un entraîneur sous forme de tige à coulisse (6) ou de coulisseau, guidé des deux côtés dans la coulisse (8) et servant à convertir le mouvement de rotation de l'actionneur rotatif en un mouvement de translation de l'élément de fermeture (3) dans le sens axial,
la sécurité anti-rotation à l'extrémité supérieure de la douille de soupape présente un bord en saillie dont au moins un côté est aplani et vient se loger exactement dans un évidement du corps de soupape, ou que la paroi extérieure de la douille de soupape (7) est, du moins en partie, de forme angulaire et que le corps de soupape (1) présente un creux de forme angulaire correspondante pour la douille de soupape (7), la douille de soupape venant se loger exactement dans le corps de soupape.

2. Soupape selon la revendication 1, **caractérisée en ce que** la douille de soupape et l'élément de transmission ne présentent pas de filetage au niveau des parties se faisant face.

3. Soupape selon la revendication 1 ou 2, **caractérisée en ce que** le profil de la coulisse (8) présente une forme hélicoïdale.

4. Soupape selon l'une quelconque des revendications précédentes, **caractérisée en ce que** la douille de soupape présente deux coulisses (8), que l'élément de transmission (5) présente deux entraîneurs (6) guidés des deux côtés dans les coulisses, et que le profil des deux coulisses (8) présente une forme hélicoïdale dont les angles sont respectivement inférieurs à 180°.

5. Soupape selon l'une quelconque des revendications précédentes, **caractérisée en ce qu'**un engrenage est prévu pour démultiplier le régime de l'actionneur rotatif en un mouvement de rotation de l'élément de transmission (5) d'un angle défini par la douille de soupape.

6. Soupape selon l'une quelconque des revendications précédentes, **caractérisée en ce qu'**au moins un capteur de pression est disposé au niveau du corps de soupape.

7. Soupape selon l'une quelconque des revendications précédentes, **caractérisée en ce qu'**un capteur de couple est disposé au niveau de l'élément de transmission ou de l'actionneur rotatif.

8. Soupape selon l'une quelconque des revendications précédentes, **caractérisée en ce que** la soupape est montée sur un socle (13), avec un orifice d'admission (15) dans le socle et un orifice de sortie (14) du socle pour le fluide s'écoulant.

9. Soupape selon la revendication 8, **caractérisée en ce que** des capteurs de pression sont disposés au niveau de l'orifice d'admission et de l'orifice de sortie.

10. Soupape selon l'une quelconque des revendications précédentes, **caractérisée en ce qu'**un système de commande est prévu pour commander la soupape.

11. Soupape selon les revendications 6 et 10, **caractérisée en ce que** les capteurs de pression sont reliés au système de commande par une interface.

12. Soupape selon la revendication 11, **caractérisée en ce que** les capteurs de pression et le système de commande sont équipés chacun d'un émetteur et d'un récepteur servant à la transmission sans fil des données.

13. Dispositif servant à réguler la pression, **caractérisé en ce qu'**au moins deux soupapes selon l'une quelconque des revendications 1 à 12 sont montées sur un socle (13) avec un dispositif de guidage des gaz (16).

14. Procédé pour la commande de plusieurs soupapes selon l'une quelconque des revendications 1 à 12, reliées les unes aux autres et traversées par un fluide, le fluide étant refoulé par un dispositif de transport de fluide, **caractérisé en ce qu'**une valeur de pression théorique est prédéfinie pour chaque soupape, qu'une pression prédéfinie est additionnée à la valeur théorique la plus élevée, et que cette somme est réglée en tant que valeur théorique pour la pression du dispositif de transport de fluide, que le couple est saisi au niveau de l'élément de transmission de la soupape, et que la soupape est nettoyée au moyen du fluide lors du dépassement d'une valeur théorique prédéfinie du couple.
